# EUROPÄISCHE PATENTANMELDUNG

(11) **EP 0 590 261 A2**
(43) Veröffentlichungstag der Anmeldung: **06.04.1994**
(21) Anmeldenummer: 93111895.4
(22) Anmeldetag: 24.07.1993
(51) Int. Cl.: G06K 17/00

(54) **Verfahren und Vorrichtung zur Erfassung von Presseerzeugnissen, wie Zeitschriften**

(30) Priorität: 01.10.1992 DE 4233004
(71) Anmelder: Geintzer, Wolfgang, D-72622 Nürtingen (DE); Hirning, Dieter, D-71263 Weil der Stadt (DE)
(72) Erfinder: Geintzer, Wolfgang, D-72622 Nürtingen (DE); Hirning, Dieter, D-71263 Weil der Stadt (DE)
(74) Vertreter: Vetter, Hans, Dipl.-Phys. Dr.

(57) **Zusammenfassung**

Es wird ein Verfahren zur Erfassung von Presseerzeugnissen, wie Zeitschriften (11), vorgeschlagen, die mit einer maschinell lesbaren Codierung (16) versehen sind und die vom Einzelhändler an den Grossisten oder Hersteller gegen finanzielle Rückvergütung bzw. Gutschrift wieder zurückgegeben werden. Hierzu werden die zurückzugebenden Presseerzeugnisse beim Einzelhändler zunächst in einen Rückgabebehälter (10) eingegeben, der mit einer Einwurföffnung (12) für die Presseerzeugnisse versehen ist. Weiterhin ist eine Lesevorrichtung (15) im Bereich der Einwurföffnung (12) angeordnet, und Speichermittel sind zur Speicherung wenigstens der jeweiligen Anzahl der durch die Lesevorrichtung (15) erfaßten unterschiedlichen Sorten der Presseerzeugnisse vorgesehen, wobei eine automatische Speicherung erfolgt. Eine Auswertung erfolgt mittels eines Computers (17), wobei ein Ausdruck über die Gutschrift erstellt werden kann. Durch dieses Verfahren und die entsprechende Vorrichtung kann auf das bisherige mühsame Zählen und Ausfüllen von Rückgabeformularen gänzlich verzichtet werden, wobei auch Fehler und Reklamationen weitgehend ausgeschlossen sind.

## Beschreibung

Die Erfindung betrifft ein Verfahren zur Erfassung von Presseerzeugnissen, wie Zeitschriften, die mit einer maschinell lesbaren Codierung versehen sind und die vom Einzelhändler an den Grossisten oder Hersteller gegen finanzielle Rückvergütung wieder zurückgegeben werden, sowie eine entsprechende Vorrichtung zum Lesen dieser Codierung mittels einer Lesevorrichtung.

Eine Besonderheit beim Handel mit Presseerzeugnissen ist die Möglichkeit, nicht verkaufte Exemplare dem Grossisten bzw. dem Verlag zurückzugeben. Hierzu trägt der Einzelhändler die nicht verkauften Exemplare auf einem Remissionsschein ein und gibt ihn zusammen mit den Heften an den Grossisten bzw. den Verlag zurück. Dort werden die auf dem Remissionsschein eingetragenen Informationen geprüft, und der Kunde erhält eine Gutschrift, sofern keine Differenzen vorliegen. Diese Differenzen führen dann wiederum häufig zu Reklamationen, und oft ist eine Klärung kaum möglich, wo der Fehler vorlag. Die Grossisten bzw. der Verlag setzen sehr teure Anlagen ein, um die zurückgegebenen Presseerzeugnisse zu prüfen, beispielsweise aus der US 4 166 540 oder aus der US 4 447 715 bekannte automatische Sortieranlagen mit optischem Scanner zur Erfassung eines Loch- oder Barcodes auf den Titelseiten. In der Praxis können etwa nur 65 % aller Presseerzeugnisse über solche Anlagen laufen, der Rest muß weiter von Hand bearbeitet werden. Hierbei kommt es neben dem großen finanziellen Aufwand auch noch zu einem enormen Zeitdruck, da die Abrechnung an die Verlage fristgemäß abgeliefert werden muß. Beim Grossisten entsteht dadurch eine aufwendige Reklamationsverarbeitung, eine langwierige Remissionsbearbeitung und ein Zeitdruck bezüglich der termingerechten Ablieferung der Daten an den Verlag, während der Einzelhändler die nicht verkauften Exemplare zählen und die erfaßten Zahlen in einen Remissionsschein eintragen muß. Danach müssen die Presseerzeugnisse verpackt werden, und schließlich muß die erteilte Gutschrift unter Zuordnung des jeweiligen Remissionsdatums überprüft werden.

Die Aufgabe der vorliegenden Erfindung besteht darin, das bekannte aufwendige Verfahren unter Vermeidung des mehrfachen Sortierens und Zählens der zurückgegebenen Presseerzeugnisse zu vereinfachen und dadurch schneller und kostengünstiger zu gestalten und eine entsprechende Vorrichtung aufzuzeigen.

Diese Aufgabe wird erfindungsgemäß dadurch gelöst, daß die zurückzugebenden Presseerzeugnisse beim Einzelhändler in einen Rückgabebehälter eingegeben werden, der mit einer Lesevorrichtung für eine maschinell lesbare Codierung auf den Presseerzeugnissen versehenist, daß wenigstens die jeweilige Anzahl der verschiedenen eingegebenen Ausgaben von durch die Lesevorrichtung erfaßten Presseerzeugnissen automatisch gespeichert und mittels eines Computers ausgewertet wird und daß ein Ausdruck über die Rückvergütung erstellt wird.

Die hierfür erfindungsgemäß vorgesehene Vorrichtung weist einen Rückgabebehälter mit einer Einwurföffnung für die Presseerzeugnisse auf, wobei die Lesevorrichtung im Bereich der Einwurföffung angeordnet ist. Weiterhin sind Speichermittel zur Speicherung wenigstens der jeweiligen Anzahl der durch die Lesevorrichtung erfaßten unterschiedlichen Ausgaben der Presseerzeugnisse vorgesehen.

Das erfindungsgemäße Verfahren und die erfindungsgemäße Vorrichtung haben den Vorteil, daß die Erfassung der zurückgegebenen Presseerzeugnisse dezentral beim Einzelhändler auf einfache Weise erfolgt, während beim Grossisten bzw. beim Verlag keine entsprechenden Vorricltungen mehr erforderlich sind. Durch Verwendung der maschinell lesbaren Codierung zur Erfassung der zurückzugebenden Presseerzeugnisse ist kein mühsames Zählen mehr erforderlich, vielmehr erfolgt dieses automatisch. Ein Ausfüllen der Rückgabescheine entfällt ebenfalls. Ein Bündeln und Verpacken kann auch entfallen, da die zurückgegebenen Exemplare im Rückgabebehälter gespeichert sind. Ein Überprüfen der Gutschrift ist ebenfalls prinzipiell nicht mehr erforderlich, allenfalls in bezug auf ein defektes Gerät. Beim Grossisten ist keinerlei Überprüfung mehr erforderlich, und Reklamationen sind nicht mehr zu erwarten. Es müssen lediglich die verschiedenen von den Einzelhändlern zurückgegebenen Ausgaben vom Einzelhändler sortiert werden, ein Zählen oder eine Bearbeitung vom Einzelhändler entfällt vollständig. Die Daten der einzelnen Einzelhändler können jederzeit aufgerufen werden.

Durch die in den Unteransprüchen aufgeführten Maßnahmen sind vorteilhafte Weiterbildungen und Verbesserungen des im Anspruch 1 angegebenen Verfahrens bzw. der im Anspruch 7 angegebenen Vorrichtung möglich.

Bei größeren Einzelhändlern ist der Computer zweckmäßigerweise ortsfest dort installiert, und eine die zurückzugebenden Presseerzeugnisse abholende Person braucht lediglich den Rückgabebehälter leeren. Einen Ausdruck, der die Zahl der jeweils eingegebenen Exemplare bzw. die aktuelle Gutschrift ausweist, kann der Einzelhändler jederzeit selbst veranlassen. Durch Datenübertragung über ein Modem oder durch Versenden von Datenträgern, wie Disketten, können die Daten dem Grossisten übermittelt bzw. von diesem abgerufen werden, um eine entsprechende Gutschrift zu erstellen.

Bei kleineren Einzelhändlern schließt eine die zurückzugebenden Presseerzeugnisse abholende Person den Computer oder eine Datenübertragungsleitung zur Datenübertragung über ein Modem an die mit einer Speichereinrichtung versehene Lesevorrichtung an und erstellt ein Protokoll. Weiterhin wird der Rückgabebehälter geleert. Hierzu kann die abholende Person beispielsweise einen tragbaren Computer mitbringen.

Bei sehr kleinen Einzelhändlern bringt die die zurückzugebenden Presserzeugnisse abholende Person den Rückgabebehälter und den Computer mit, gibt die Presseerzeugnisse ein und erstellt ein Protokoll. Aus diesem kann der Einzelhändler sofort die Anzahl der zurückgegebenen Exemplare und vorzugsweise auch den Gutschriftsbetrag entnehmen. Das Protokoll kann bereits die Abrechnung darstellen, jedoch kann diese auch vom Grossisten erstellt und zugesandt werden.

In vorteilhafter Weise können im Computer auch die Daten über die gelieferten Presseerzeugnisse gespeichert sein, wobei dann ein Vergleich mit den zurückzugebenden Presseerzeugnissen vorgenommen wird. Hierdurch kann ausgeschlossen werden, daß die Zahl der zurückgegebenen Exemplare die Zahl der erhaltenen Exemplare übersteigt, so daß hierdurch eine zusätzliche Sicherheit gegen einen Mißbrauch gegeben ist.

In vorteilhafter Weiterbildung der erfindungsgemäßen Vorrichtung ist die Lesevorrichtung mit einem Computer zur Auswertung der erfaßten Presseerzeugnisse verbindbar, wobei die Lesevorrichtung insbesondere mit einem Zwischenspeicher versehen ist, dessen Daten durch den Computer auslesbar sind. Hierdurch ist es möglich, einen Computer fest zu installieren oder lediglich bei Bedarf anzuschließen, um die Auswertung durchzuführen.

Zur schnellen und einfachen Auswertung sind im Computer die erfaßten Presseerzeugnisse mit dem jeweiligen zugeordneten Rückgabewert multiplizierende und die Produkte zu einer Gesamtsumme addierende Rechenmittel vorgesehen, so daß nicht nur das Zählen, sondern auch die Auswertung automatisch erfolgt.

Der Rückgabebehälter ist zweckmäßigerweise mit einer verschließbaren Entnahmeöffnung versehen, aus der die die Presseerzeugnisse abholende Person die zurückgegebenen Exemplare entnehmen kann, während im übrigen kein Zugriff möglich ist.

Als maschinell lesbare Codierung eignet sich vor allem ein Barcode auf den Presseerzeugnissen, der durch einen entsprechenden Scanner erfaßt wird. Das Anbringen eines Barcodes ist bei Presseerzeugnissen besonders einfach, wobei prinzipiell auch andere optische oder magnetisch abtastbare Codierungen möglich sind.

Um einen Mißbrauch zu verhindern, sind vorzugsweise Mittel zur Verhinderung der Herausnahme eines Druckerzeugnisses aus der Einwurföffnung nach erfolgter Erfassung durch die Lesevorrichtung vorgesehen. Diese Mittel können insbesondere als mechanische Sperrvorrichtungen oder Einzugswalzen ausgebildet sein, die das erfaßte Exemplar sofort in den Rückgabebehälter einziehen.

Alernativ oder zusätzlich sind auch Mittel zur Verhinderung einer bleibenden Registrierung eines Druckerzeugnisses beim Herausziehen des Druckerzeugnisses aus der Einwurföffnung nach der Erfassung durch die Lesevorrichtung in vorteilhafter Weise einsetzbar. Diese Mittel können beispielsweise den Einwurfvorgang zeitlich oder richtungsmäßig überwachen, z.B. durch Lichtschranken.

Die Einwurföffnung ist zweckmäßigerweise als Einwurfschlitz ausgebildet, wobei die Lesevorrichtung von diesem Einwurfschlitz aus zum Rückgabebehälter hin beabstandet und fest fixiert angeordnet ist. Hierdurch ist gewährleistet, daß das zurückzugebende Exemplar bereits überwiegend in den Rückgabebehälter eingeführt ist, bevor eine Registrierung erfolgt. Hierdurch kann in einfacher Weise ein Herausziehen eines Exemplars nach der Registrierung verhindert werden.

Ausführungsbeispiele der Erfindung sind in der Zeichnung dargestellt und in der nachfolgenden Beschreibung näher erläutert. Es zeigen:
- Fig. 1: eine perspektivische Ansicht eines Rückgabebehälters mit einer Lesevorrichtung und einem auswertenden Computer,
- Fig. 2: eine schematische Darstellung einer Lesevorrichtung mit einer Sicherheitseinrichtung gegen ein Herausziehen des Presseerzeugnisses nach der Registrierung und
- Fig. 3: eine weitere schematische Darstellung einer Lesevorrichtung mit einer Sicherheitseinrichtung gegen ein Herausziehen nach der Registrierung.

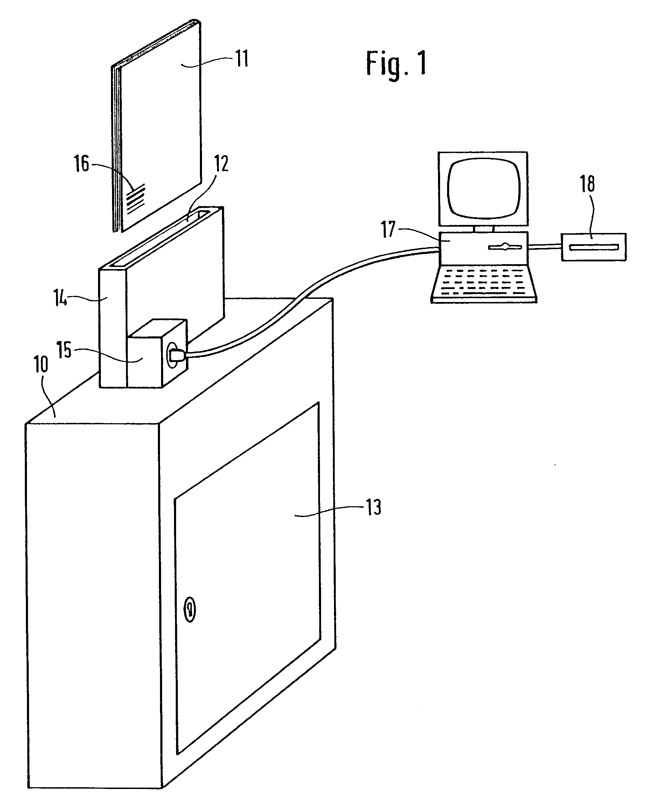

In Fig. 1 ist ein kastenförmiger Rückgabebehälter 10 dargestellt, in den Presseerzeugnisse, wie Zeitschriften 11 od.dgl., durch einen Schlitz 12 an der Oberseite eingeworfen werden können. Die Entnahme aller eingeworfenen Zeitschriften 11 erfolgt über eine abschließbare Tür 13 an einer Seite.

Der Schlitz 12 setzt sich an der Oberseite durch eine vertikal aufgesetzte plattenartige Einwurfvorrichtung 14 fort. Am unteren, am Rückgabebehälter 10 anliegenden Endbereich der Einwurfvorrichtung 14 ist seitlich eine automatische Lesevorrichtung 15 angeordnet, die als Scanner für einen Barcode 16 ausgebildet ist, der an jeder Zeitschrift 11 an einer bestimmten Stelle vorgesehen sein muß. Die Lesevorrichtung 15 ist zur Auswertung der erfaßten eingeworfenen Zeitschriften 11 mit einem Computer 17 verbunden, an den ein Drucker 18 angeschlossen ist.

Bei jedem Einzelhändler, der Zeitschriften 11 von einem Grossisten oder von einem Verlag bezieht und die nicht verkauften Exemplare zurückgeben will, wird ein derartiger Rückgabebehälter 10 installiert. Der Einzelhändler wirft die zurückzugebenden Exemplare durch die Einwurfvorrichtung 14 in den Rückgabebehälter 10 ein, wobei durch Lesen des Barcodes 16 die verschiedenen Ausgaben von Zeitschriften 11 erkannt und separat aufsummiert werden. Diese erfaßten Anzahlen von eingeworfenen Zeitschriften 11 werden zunächst in einem Zwischenspeicher der Lesevorrichtung 15 gespeichert und können von dort aus in den Computer 17 eingelesen werden. Zur Auswertung werden jeder Zeitschriftensorte zugeordnete Rückgabevergütungen mit der aufsummierten Anzahl multipliziert und eine Gesamtsumme gebildet, die die Gutschrift für die zurückgegebenen Exemplare aufzeigt. Der Einzelhändler kann diese Auswertung am Bildschirm jederzeit aufrufen oder über einen Drucker 18 aus drucken. Bei einer einfacheren Lösung kann der Einzelhändler nur die eingegebenen Zeitschriften nach Ausgaben unterteilt ablesen bzw. ausdrucken lassen.

Es ist auch möglich, daß eine Sperre vorgesehen ist, auf Grund derer die Erstellung des Ausdrucks nur der die zurückzugebenden Exemplare abholenden Person vorbehalten ist. Nach Erstellung eines Protokolls oder auch schon zuvor werden die eingeworfenen Zeitschriften 11 von der abholenden Person durch Öffnen der Tür 13 aus dem Rückgabebehälter 10 entnommen und abtransportiert. Danach wird die Lesevorrichtung 15 wieder auf einen Initialzustand rückgesetzt.

Bei kleineren Einzelhändlern kann die abholende Person beispielsweise auch einen entsprechenden Computer 17, vorzugsweise in tragbarer Ausführung, mitbringen und an die Lesevorrichtung 15 zum Auslesen der Daten und zur Auswertung anschließen. Hierbei wird ein Protokoll für den Einzelhändler erstellt. In beiden Fällen werden die Daten beispielsweise über ein Modem oder einen Datenträger direkt dem Grossisten oder Verlag übermittelt, damit sie dort gleich registriert und rechnungsmäßig ausgewertet werden können.

Bei sehr kleinen Einzelhändlern mit geringem Umsatz kann die abholende Person auch einen derartigen Rückgabebehälter 10 in einem Lieferwagen od.dgl. mitbringen, wobei dann die gesammelten Exemplare des Einzelhändlers, die dieser zurückgeben will, eingeworfen und registriert werden. Ein Protokoll erhält der Einzelhändler dann gleich als Quittung. Die Gutschrift wird ihm dann vom Grossisten zugesandt.

Im Computer 17 können auch die entsprechenden Lieferungen der Zeitschriften und das Lieferdatum gespeichert sein, so daß ein automatischer Vergleich mit den rückgegebenen Mengen möglich ist, um zu verhindern, daß ein Einzelhändler größere Mengen zurückgibt, als er erhalten hat. Auch eine Rückgabe von Zeitschriften, die er gar nicht bezogen hat, kann dadurch verhindert werden.

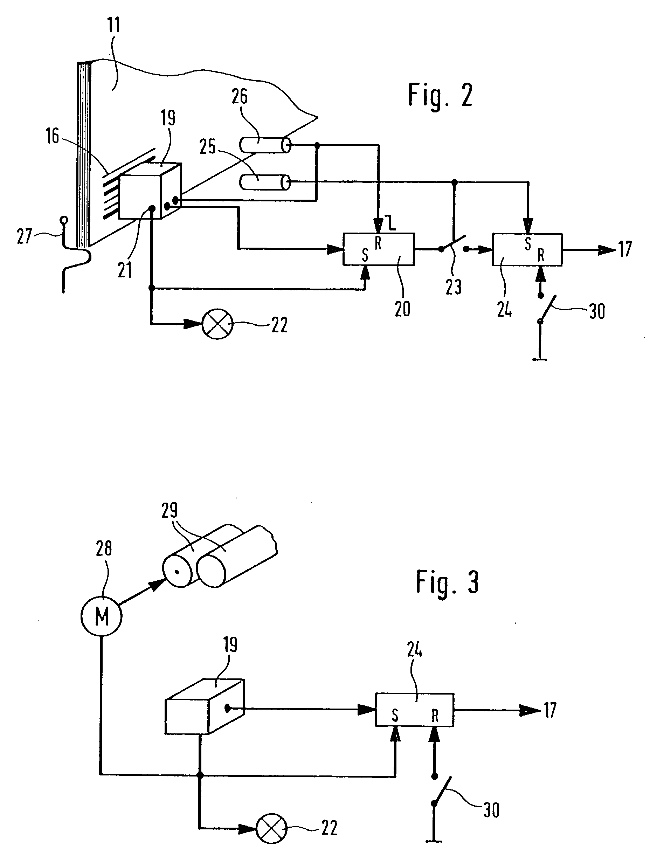

Bei der in Fig. 1 beschriebenen Anordnung könnte prinzipiell ein Mißbrauch dadurch erfolgen, daß zurückzugebende Zeitschriften mehrfach in die Einwurfvorrichtung 14 eingeschoben, registriert und wieder herausgezogen werden. Um einen solchen-Mißbrauch auszuschließen, müssen entsprechende Mittel vorgesehen sein, die diesen verhindern. Eine derartige Sicherheitseinrichtung zur Verhinderung eines Mißbrauchs ist in Fig. 2 dargestellt. Die dargestellte Anordnung ist dabei in der Lesevorrichtung 15 enthalten. Insbesondere weist diese Lesevorrichtung 15 einen Scanner 19 zur Erfassung des Barcodes 16 auf. Die erfaßten Daten werden vom Scanner 19 einem ersten Zwischenspeicher 20 zugeführt. Wird durch den Scanner 19 ein Barcode 16 korrekt erkannt, so wird durch ein entsprechendes Signal an einem Bestätigungsausgang 21 eine Kontrolleuchte 22 betätigt und ein Setzeingang S des Zwischenspeichers 20 zur Übernahme der Daten aktiviert. Ein über eine Schalteinrichtung 23 mit dem ersten Zwischenspeicher 20 verbundener zweiter Zwischenspeicher 24 kann die Daten nur dann übernehmen, wenn die Schalteinrichtung 23 geschlossen wird. Dies erfolgt dadurch, indem nach dem Aufleuchten der Kontrolleuchte 22 die Zeitschrift 11 weiter in die Einwurföffnung 14 eingeschoben wird, indem man sie z.B. losläßt, damit sie in den Rückgabebehälter 10 hineinfällt. Sie passiert dabei eine Lichtschranke 25, die so weit unten angeordnet ist, daß sie erst dann von der Zeitschrift 11 ausgelöst werden kann, wenn diese ganz in der Einwurfvorrichtung 14 verschwunden ist. Bei Betätigung der Lichtschranke 25 durch die eingeworfene Zeitschrift 11 wird die Schalteinrichtung 23 geschlossen, und die Daten werden vom ersten Zwischenspeicher 20 in den zweiten Zwischenspeicher 24 übernommen. Von dort aus können sie dann vom Computer 17 abgerufen werden. Wird dagegen nach einem erfolgreichen Scan-Vorgang die Zeitschrift 11 wieder herausgezogen, so gibt sie eine zweite Lichtschranke 26 frei, die oberhalb der ersten Lichtschranke 25 angeordnet ist und von der Zeitschrift 11 während des Scan-Vorgangs überdeckt wird. Ein Herausziehen der Zeitschrift 11 würde zu einem Signal der zweiten Lichtschranke 26 führen, durch das der erste Zwischenspeicher 20 rückgesetzt wird, so daß die Registrierung wieder gelöscht wird.

Alternativ zu dieser Ausführung könnte beispielsweise auch nach erfolgtem Scan-Vorgang ein Zeitglied gestartet werden, wobei die zweite Lichtschranke 26 dann innerhalb der Haltezeit dieses Halteglieds betätigt werden muß. Praktisch würde dies bedeuten, daß man die Zeitschrift 11 zum Scannen in die Einwurfvorrichtung 14 einschiebt und dann nach Aufleuchten der Kontrolleuchte 22 sofort ganz einschiebt bzw. fallenläßt.

Um eine optimale Positionierung der Zeitschrift 11 zum Scannen zu gewährleisten, kann beispielsweise in der Einwurfvorrichtung 14 in einer entsprechenden Höhe ein Anschlagglied 27 angeordnet sein, das zunächst einen Widerstand beim Einschieben in der korrekten Höhe zum Scannen hervorruft, dann aber bei einem weiteren Einschieben ausgelenkt wird und ein Hineinfallen der Zeitschrift 11 zuläßt.

Bei dem in Fig. 3 dargestellten weiteren Ausführungsbeispiel entfällt der erste Zwischenspeicher 20, und der zweite Zwischenspeicher 24 ist direkt mit dem Datenausgang des Scanners 19 verbunden. Das den erfolgreichen Scan-Vorgang kennzeichnende Signal am Ausgang 21 des Scanners 19 steuert hier nicht nur die Kontrolleuchte 22 und den Setzeingang des Zwischenspeichers 24, sondern steuert auch noch einen Motor 28, durch den zwei Einzugswalzen 29 angetrieben werden. Die zum Scannen eingeschobene Zeitschrift 11 befindet sich zwischen diesen Einzugswalzen 29, und bei erfolgtem Scan-Vorgang wird die Zeitschrift 11 sofort durch die Einzugswalzen 29 eingezogen und in den Rückgabebehälter 10 eingeworfen. Diese Einzugswalzen 29 weisen beispielsweise einen Freilauf auf, durch den ein Wiederherausziehen der Zeitschrift 11 ausgeschlossen ist.

Bei beiden Ausführungsbeispielen ist ein Rücksetzschalter 30 mit dem Rücksetzeingang des Zwischenspeichers 24 verbunden. Durch Betätigung dieses Rücksetzschalters 30 beispielsweise durch die die Zeitschriften abholende Person kann der Zwischenspeicher 24 wieder initialisiert werden, das heißt, auf den Wert Null rückgesetzt werden.

Weitere Möglichkeiten zur Verhinderung eines Herausziehens einer bereits registrierten Zeitschrift 11 können beispielsweise darin bestehen, Arretierspitzen schräg an die Zeitschrift 11 heranzuschwenken, wenn eine Registrierung erfolgt ist. Bei einem Versuch, die Zeitschrift herauszuziehen, würden sich diese Spitzen dann in die Zeitschrift einbohren und dadurch ein Herausziehen verhindern. Es ist auch möglich, den Scanner 19 so auszubilden, daß er den Barcode 16 nur in einer ersten, bestimmten Durchlaufrichtung registriert, wobei dann ein Herausziehen eine entgegengesetzte Registrierung, also ein Löschen, zur Folge hätte.

Die Einwurfvorrichtung 14 bzw. der Schlitz 12 kann selbstverständlich prinzipiell auch seitlich am Rückgabebehälter 10 angeordnet und beispielsweise schräg geneigt sein. Weiterhin kann anstelle eines Scanners 19 zur Erfassung eines Barcodes 16 auch eine andere bekannte Lesevorrichtung treten, zum optischen oder induktiven Erfassen einer optischen oder magnetischen Codierung. Weiterhin können die Lesevorrichtung 15 und die Einwurfvorrichtung 14 auch vollständig im Rückgabebehälter 10 integriert sein, so daß dort außen lediglich der Schlitz 12 in Erscheinung tritt. Weiterhin kann auch der Computer 17 auf dem Rückgabebehälter 10 angeordnet oder in diesen integriert sein. Anstelle eines optischen Signals durch die Kontrolleuchte 22 zur Signalisierung eines erfolgreichen Lesevorgangs kann auch alternativ oder zusätzlich ein akustisches Signal treten.

Der Rückgabebehälter kann auch mehrere Fächer aufweisen, in die die eingegebenen Zeitschriften nach vorgegebenen Aufteilungskriterien aufgeteilt werden. Ein solches Aufteilungskriterium kann beispielsweise die Sortierung nach wiederverwertbaren und nicht wiederverwertbaren Zeitschriften sein. Durch die Lesevorrichtung werden die jeweiligen Zeitschriften erkannt, und eine Trennvorrichtung, beispielsweise eine Umlenkklappe, kann dann die eingeworfenen Zeitschriften entsprechend zwei Fächern alternativ zuführen. Selbstverständlich kann auch eine größere Anzahl von Fächern vorgesehen sein, in die die Zeitschriften bereits nach Ausgaben oder nach Verlagen geordnet einsortiert werden.

## Patentansprüche

1. Verfahren zur Erfassung von Presseerzeugnissen, wie Zeitschriften, die mit einer maschinell lesbaren Codierung versehen sind und die vom Einzelhändler an den Grossisten oder Hersteller gegen finanzielle Rückvergütung oder Gutschrift wieder zurückgegeben werden, dadurch gekennzeichnet, daß die zurückzugebenden Presseerzeugnisse (11) beim Einzelhändler in einen Rückgabebehälter (10) eingegeben werden, der mit einer Lesevorrichtung (15) für eine maschinell lesbare Codierung (16) auf den Presseerzeugnissen (11) versehen ist, daß wenigstens die jeweilige Anzahl der verschiedenen eingegebenen Ausgaben von durch die Lesevorrichtung (15) erfaßten Presseerzeugnissen automatisch gespeichert und mittels eines Computers (17) ausgewertet wird und daß ein Ausdruck über den Rückgabeumfang erstellt wird.

2. Verfahren nach Anspruch 1, dadurch gekennzeichnet, daß der Computer (17) ortsfest beim Einzelhändler installiert ist und daß eine die zurückzugebenden Presseerzeugnisse (11) abholende Person den Rückgabebehälter (10) leert, wobei die Daten über die eingegebenen und erfaßten Presseerzeugnisse durch Datenfernübertragung oder über einen Datenträger dem Grossisten übermittelt werden, der die Gutschrift erstellt.

3. Verfahren nach Anspruch 1, dadurch gekennzeichnet, daß eine die zurückzugebenden Presseerzeugnisse (11) abholende Person den Computer (17) oder eine Datenübertragungsleitung an die mit einer Speichereinrichtung (24) versehene Lesevorrichtung (15) anschließt, ein Protokoll erstellt und den Rückgabebehälter leert.

4. Verfahren nach Anspruch 1, dadurch gekennzeichnet, daß eine die zurückzugebenden Presseerzeugnisse (11) abholende Person den Rückgabebehälter und den Computer mitbringt, die Presseerzeugnisse (11) eingibt und ein Protokoll erstellt.

5. Verfahren nach Anspruch 3 oder 4, dadurch gekennzeichnet, daß das Protokoll die Auflistung der Anzahl der verschiedenen Ausgaben der zurückzugebenden Presseerzeugnisse (11) und/oder den Gutschriftsbetrag ausweist.

6. Verfahren nach einem der vorhergehenden Ansprüche, dadurch gekennzeichnet, daß im Computer (17) die Daten über die gelieferten Presseerzeugnisse gespeichert werden und mit denen der zurückzugebenden Presserzeugnisse verglichen werden.

7. Vorrichtung zur Erfassung von Presseerzeugnissen, wie Zeitschriften, die mit einer maschinell lesbaren Codierung versehen sind, mittels einer Lesevorrichtung, dadurch gekennzeichnet, daß ein Rückgabebehälter (10) mit einer Einwurföffnung (12) für die Presseerzeugnisse (11) vorgesehen ist, daß die Lesevorrichtung (15) im Bereich der Einwurföffnung (12) angeordnet ist und daß Speichermittel (24) zur Speicherung wenigstens der jeweiligen Anzahl der durch die Lesevorrichtung (15) erfaßten unterschiedlichen Ausgaben der Presseerzeugnisse (11) vorgesehen sind.

8. Vorrichtung nach Anspruch 7, dadurch gekennzeichnet, daß die Lesevorrichtung (15) mit einem Computer (17) zur Auswertung der erfaßten Presseerzeugnisse (11) verbindbar ist.

9. Vorrichtung nach Anspruch 8, dadurch gekennzeichnet, daß die Lesevorrichtung (15) mit einem Zwischenspeicher (24) versehen ist, dessen Daten durch den Computer (17) auslesbar sind.

10. Vorrichtung nach Anspruch 8 oder 9, dadurch gekennzeichnet, daß die jeweilige Anzahl der verschiedenen erfaßten Presseerzeugnisse mit dem jeweiligen zugeordneten Rückgabewert multiplizierende und die erhaltenen Produkte zu einer Gesamtsumme addierende Rechenmittel im Computer (17) vorgesehen sind.

11. Vorrichtung nach einem der Ansprüche 7 bis 10, dadurch gekennzeichnet, daß der Rückgabebehälter (10) mit einer verschließbaren Entnahmeöffnung (13) versehen ist.

12. Vorrichtung nach einem der Ansprüche 7 bis 11, dadurch gekennzeichnet, daß die Lesevorrichtung (15) mit einem einen Barcode (16) auf den Presseerzeugnissen (11) erfassenden Scanner (19) versehen ist.

13. Vorrichtung nach einem der Ansprüche 7 bis 12, dadurch gekennzeichnet, daß Mittel (28,29) zur Verhinderung der Herausnahme eines Presseerzeugnisses (11) aus der Einwurföffnung (12) nach der erfolgten Erfassung durch die Lesevorrichtung (15) vorgesehen sind.

14. Vorrichtung nach Anspruch 13, dadurch gekennzeichnet, daß die Mittel (28,29) als mechanische Sperrvorrichtungen oder Einzugswalzen ausgebildet sind.

15. Vorrichtung nach einem der Ansprüche 7 bis 12, dadurch gekennzeichnet, daß Mittel (20,21,23,25,26) zur Verhinderung einer bleibenden Registrierung eines Presseerzeugnisses (11) beim Herausziehen desselben aus der Einwurföffnung (12) nach der Erfassung durch die Lesevorrichtung (15) vorgesehen sind.

16. Vorrichtung nach Anspruch 15, dadurch gekennzeichnet, daß die Mittel (20,21,23,25,26) als den Einwurfvorgang zeitlich oder richtungsmäßig überwachende Überwachungseinrichtung ausgebildet sind.

17. Vorrichtung nach einem der Ansprüche 7 bis 16, dadurch gekennzeichnet, daß die Einwurföffnung (12) als Einwurfschlitz ausgebildet ist und daß die Lesevorrichtung von diesem Einwurfschlitz aus zum Rückgabebehälter hin beabstandet und fest fixiert angeordnet ist.

18. Vorrichtung nach einem der Ansprüche 7 bis 17, dadurch gekennzeichnet, daß der Rückgabebehälter (10) wenigstens zwei Fächer aufweist und daß eine die eingegebenen Presseerzeugnisse nach vorgegebenen Aufteilungskriterien in die Fächer aufteilende Trennvorrichtung vorgesehen ist.
